(19) Europäisches Patentamt

European Patent Office

Office européen des brevets

(11) Publication number: **0 408 201 B1**

(12) **EUROPEAN PATENT SPECIFICATION**

(45) Date of publication of patent specification: **28.06.95** (51) Int. Cl.⁶: **C08G 18/48**

(21) Application number: **90306585.2**

(22) Date of filing: **15.06.90**

The file contains technical information submitted after the application was filed and not included in this specification

(54) **Process for preparing elastomeric polyurethane or polyurethane-urea polymers, and polyurethanes so prepared.**

(30) Priority: **16.06.89 US 367280**

(43) Date of publication of application:
**16.01.91 Bulletin 91/03**

(45) Publication of the grant of the patent:
**28.06.95 Bulletin 95/26**

(84) Designated Contracting States:
**AT BE CH DE DK ES FR GB GR IT LI LU NL SE**

(56) References cited:
EP-A- 0 077 953      EP-A- 0 268 922
EP-A- 0 369 487      EP-A- 0 394 487
US-A- 3 829 505      US-A- 4 326 047
US-A- 4 687 851

**Kunststoff Handbuch, 7, Polyurethane, pp. 44-51**

**Dege et al. Journal of the American Chemical Society pp.3374-3379, vol 81 (1959)**

(73) Proprietor: **THE DOW CHEMICAL COMPANY**
**2030 Dow Center,**
**Abbott Road**
**Midland,**
**Michigan 48640 (US)**

(72) Inventor: **Porter, James R.**
**103 Spruce**
**Lake Jackson,**
**Texas 77566 (US)**
Inventor: **Turner, Robert B.**
**328 Huckleberry**
**Lake Jackson,**
**Texas 77566 (US)**

(74) Representative: **Burford, Anthony Frederick et al**
**W.H. Beck, Greener & Co.**
**7 Stone Buildings**
**Lincoln's Inn**
**London WC2A 3SZ (GB)**

**Description**

This invention relates to a two-stage process for preparing polyurethane and/or polyurea elastomers (PUU elastomers), and particularly to a process employing a relatively high equivalent weight polymer of propylene oxide.

Polyurethane and/or polyurea elastomers are commonly prepared by reacting a polyisocyanate with a relatively high equivalent weight "polyol" and a chain extender in a mold. The "polyol" component is typically a material having an equivalent weight in the range from 800 to 5,000 which contains 2 or more active hydrogen groups per molecule. One common type of these is a polymer of propylene oxide. These poly(propylene oxide) polymers have found extensive use in preparing various types of polyurethane or polyurea elastomers. Polymers of propylene oxide provide the elastomer with very desirable properties, including flexibility, low temperature performance, toughness and softness. They are also relatively inexpensive and can be prepared having varying functionalities. Accordingly, they are the materials of choice in many elastomer applications.

However, in some instances, it is more difficult than desired to process these polymers into polyurethanes. In order to maximize production from an individual mold, the mold must be used and re-used as often as possible per unit of time. Thus, it is desired that the PUU-forming composition react quickly inside the mold so that the elastomer rapidly gains enough physical strength that it can be demolded without becoming permanently distorted.

Previously, there have been attempts to reduce demold times by increasing the reactivity of the reaction mixture. For example, the "polyol" can often be made more reactive by providing terminal primary hydroxyl groups. This is most commonly done by "capping" it with ethylene oxide. However, since not all chain ends are capped, it is usually necessary to use a substantial quantity of ethylene oxide to obtain a high conversion to primary hydroxyl groups. The capped polymer therefore contains a significant proportion of oxyethylene groups, which cause it and the resulting PUU elastomer to be moisture sensitive. In addition, this approach by itself often cannot increase the reactivity of the polyol as much as desired.

Another approach is to increase catalyst level. Although reduced demold times can be obtained in this manner, premature gelation of the reaction mixture and other unwanted side effects often occur. Because of these, the molder often has an extremely short time to transfer the reaction mixture into the mold, which limits the size of the part he can make. These problems are particularly severe in reaction injection molding (RIM) processes, wherein especially highly reactive components are used, and gel times are on the order of seconds.

Thus, it would be desirable to provide for improved processing latitude in the preparation of PUU elastomers using polymers of propylene oxide. It would also be desirable to provide such improved processing latitude while maintaining fast demold times, or even decreasing same.

In addition, it is always desirable to improve the physical properties of PUU elastomers. In making cast elastomers, improvements in tensile and tear strength are desirable. In RIM elastomers, improvement in flexural modulus ratio, heat sag and impact strength are desired. Also, RIM elastomers often exhibit defects called "surface sinks" in which areas of the polymer are slightly depressed relative to the remaining surface. It is desired to decrease the amount of these surface sinks, particularly when a high quality surface is desired, such as for external automobile parts. It would also be desirable to provide an elastomer with improved thermal properties and in some instances improved moisture sensitivity.

Dege et al (J. Am. Chem. Soc. 81 (1959) 3374-3379) discussed the presence of terminal unsaturation in polypropylene glycol synthesized by base-catalyzed addition of propylene oxide to propylene glycol initiator. It is stated that the presence of said terminal unsaturation contributes to the generation of shortened polyurethane chains. Further, it is stated that, while it was not possible to directly relate the properties of polyurethane foams to the polypropylene glycol unsaturation value, it had been shown that addition of monofunctional polyether to 2000 molecular weight polypropylene glycol affected viscosity build up and final viscosity value in diisocyanate (pre)polymer formed therefrom and at 25% reduced compression load of the foamed (pre)polymer.

Kunststoff-Handbuch 7, Polyurethane (Literatur S. 61) describes polyether polyols for use in preparing polyurethanes. In the passage bridging pages 46 to 47 reference is made to the presence of unsaturation in poly(propylene oxide) polyols. Table 3.1 on page 52 includes the properties of typical polyethers as set forth in Table A below.

Table A

| Polyether type | Synthesis | Average MW | Unsaturated Compounds (meq/g) |
|---|---|---|---|
| I | Propylene glycol Propylene oxide | 2000 ±100 | <0.04 |
| II | Trimethylolpropane Ethylene oxide Propylene oxide | 4800 ±300 | <0.06 |
| III | Trimethylolpropane Propylene oxide | 440 ±35 | <0.005 |
| IV | Saccharose Propylene glycol Propylene oxide | 380 ±25 | <0.005 |
| V | Amine Propylene oxide | 3750 ±200 | <0.04 |
| VI | Glycerin Propylene oxide | 3000 ±200 | <0.04 |

The equivalent weights of said polyether types are calculated to be as follows:

| Polyether type | Equivalent Weight |
|---|---|
| I | 950 - 1050 |
| II | 1500 - 1700 |
| III | 135 - 160 |
| IV | <180 - <205[1] |
| V | <1775 - <1975[2] |
| VI | 935 - 1065 |

[1] Depends on Saccharose content
[2] Depends on active hydrogens in the amine.

Kunststoff-Handbuch 7, Polyurethane (Literatur S. 74) (1966) also describes polyether polyols for use in preparing polyurethanes and refers (at page 64) to the presence of unsaturation in poly(propylene oxide) polyols. Table 7 on page 67 includes the properties of typical poly(propylene oxide) polyethers as set forth in Table B below.

Table B

| Polyether type | Synthesis | Average MW | Unsaturated Compounds (meq/g) |
|---|---|---|---|
| I' | Amine Propylene oxide | 3700 ±300 | <0.04 |
| II' | Trimethylolpropane Propylene oxide | 1000 ±300 | <0.05 |
| III' | Trimethylolpropane Propylene oxide | 3000 ±200 | <0.04 |
| IV' | Propylene glycol Propylene oxide | 2000 ±100 | <0.04 |
| V' | Trimethylolpropane Propylene oxide | - | <0.015 |

The equivalent weights of said polyether types are calculated to be as follows:

| Polyether type | Equivalent Weight |
|---|---|
| I' | <1700 - <2000[1] |
| II' | 235 - 435 |
| III' | 930 - 1065 |
| IV' | 950 - 1050 |
| V' | ? |

[1] Depends on active hydrogens in the amine.

US-A-3829505 discloses that polyethers having a low content of terminal unsaturation can be prepared by reacting epoxide and oxetane monomers with certain telogens in the presence of certain double metal cyanide complexes. The telogens are selected from organic hydroxy-containing compounds, sulfhydryl-containing compounds, aldehyde and ketones. Exemplified processes include polymerization of propylene oxide using, as the telogen, trimethylol propane monoallylether (Example 3), glycidol (Example 3), tri-(propylene oxide) adduct of glycol (Examples 4, 6, 7 and 9), trimethylol propane (Examples 4 and 13), ethylene glycol (Example 5), pentanediol 1,5 (Examples 5, 6, 7 and 8) resorcinol (Example 5), bisphenol A (Example 5), nonamethylene dimercaptan (Example 10), hexylene glycol (Example 13), and 1,4-butanediol (Example 13). Some of these exemplified materials are used to produce polyurethane and polyurethane foams. Equivalent molecular weights (where calculatable) of the products of these exemplified range from 435 to 3165 (see Examples 4 to 9) and the unsaturation (where specified) ranges from 1.2 to 2.4 percent per end groups (Example 6) and 0.001 to 0.0146 mm/g (Example 13).

US 4687851 discloses the preparation of polyurethane and polyurea polymers (including foams) using an active hydrogen-containing polyether having an equivalent weight of at least 2000, preferably at least 2500, and less than 0.1 meq/g, preferably less than 0.03 meq/g, terminal unsaturation. Exemplified polyethers are ethylene oxide capped poly(propylene oxide) polyols initiated with propylene oxide-glycerine adduct (Polyol A) or propylene oxide-aminoethylpiperazine adduct (Polyol B). Polyol A has an equivalent weight of 2850 and 0.016 meq/g unsaturation and Polyol B has an equivalent weight of 3260 and 0.07 meq/g unsaturation. In an exemplified process, a prepolymer prepared by reacting diphenylmethanediisocyanate and Polyol A was reacted with 1,4-butane diol to provide an elastomer having significantly inferior elongation and flexural modulus than a corresponding elastomer prepared from a Polyol B prepolymer.

EP-A-0369487 (published 23rd May 1990 and, except for DK, having common designations with the present application) contains subject matter claiming the priority date 18th November 1988. Said subject matter includes Examples 1 to 15 and the use of the relevant polyols to prepare polyurethane polymers (including foams). The polyols of said Examples are optionally ethylene oxide-capped monopropylene glycol- or polyoxypropylene glycol-initiated poly(propylene oxide) polymers having equivalent weights ranging from 1000 to 3400 and terminal unsaturation ranging from 0.009 to 0.073 meq/g.

EP-A-0394487 (published, as WO 90/04613, on 3rd May 1990 and designating DE, FR, GB and IT) contains subject matter claiming the priority date of 25th October 1988 or 10th February 1989. It discloses the preparation of polyurethane flexible foam from a polyoxyalkylene polyol having low terminal unsaturation, preferably 0.04 meq/g or less. Exemplified polyoxyalkylene polyols are polyoxypropylene glycol-initiated poly(propylene oxide) polymers having terminal unsaturation ranging from 0.018 to 0.026 meq/g.

According to the present invention, there is provided a process for preparing a polyurethane and/or polyurea wherein an isocyanate-terminated prepolymer, obtained by reacting an excess of a polyisocyanate with a first active hydrogen composition including 1000-5000 equivalent weight material, wherein the major portion by weight of the 1000-5000 equivalent weight material is a (low monol content) poly(propylene oxide) polymer having nominal functionality of at least two isocyanate-reactive groups per molecule or mixture thereof, said low monol content poly(propylene oxide) polymer or mixture thereof having at most 0.04 milliequivalent per gram (meq/g) terminal unsaturation (as measured by titration with mercuric acetate according to ASTM D-2849-69), is reacted with a (second) active hydrogen composition, characterized in that the second active hydrogen composition is different from said first active hydrogen composition and contains less weight, if any, of a said low monol content poly(propylene oxide) polymer or mixture thereof, and is selected from

(1) a mixture of a hydroxyl-terminated, nominally di- or tri-functional poly(propylene oxide) polymer of 1300 to 2500 equivalent weight having terminal ethylene oxide capping constituting up to 20 weight

4

percent of the weight of the poly(propylene oxide) and diethyltoluenediamine or other aromatic diamine chain extender containing a lower alkyl group on at least one of the carbon atoms adjacent to each amine group;

(2) a mixture of a hydroxyl-terminated, nominally di- or tri- functional poly(propylene oxide) polymer of 1300 to 2500 equivalent weight having terminal ethylene oxide capping constituting up to 20 weight percent of the weight of the poly(propylene oxide), up to equal quantities, based on weight of hydroxyl-terminated poly(propylene oxide) polymer, of a nominally di- or tri-functional aminated polyether of 150 to 6000 molecular weight, and diethyltoluenediamine or other aromatic diamine chain extender containing a lower alkyl group on at least one of the carbon atoms adjacent to each amine group, and

(3) a mixture of an amine and/or imine-terminated, nominally di- or tri- functional poly(propylene oxide) polymer of 1300 to 2500 equivalent weight and diethyltoluenediamine or other aromatic diamine chain extender containing a lower alkyl group on at least one of the carbon atoms adjacent to each amine group.

It has surprisingly been found that the use of a low monol content poly(propylene oxide) polymer on the A-side only or predominantly on the A-side provides for rapid demolding, yet provides a processing window which is broader than that provided by conventional poly(propylene oxide) polymers. Accordingly, this invention provides improved "green strength" to the molded polymers, thereby facilitating their early removal from the mold. Moreover, reaction mixtures containing the low monofunctional species polyether of this invention react slowly enough that the mixture can be formed and transferred into the mold without significant premature gelation. Thus, this invention retains the processing latitude characteristics of conventional reaction mixtures which use polyethers having high contents of monofunctional species. In addition, it is possible to reduce mold temperatures at an equivalent demold time with this invention, thereby saving on energy expenses as well as reducing the risk of burns by the mold operators. It is further possible with this invention to obtain good demold times using poly(propylene oxide) polymers having reduced oxyethylene contents. This has the further advantage of reducing the moisture sensitivity of the PUU elastomer.

"Low monol content" or "low monofunctional species content" are terms used herein to indicate a monofunctional species content of 0.04 meq/g or less.

This invention is applicable to various types of elastomeric polyurethanes, including thermosetting as well as thermoplastic polyurethanes, cast elastomers as well as RIM-processed elastomers.

The PUU elastomers of this invention also often exhibit improved physical and thermal properties. In addition, RIM-processed elastomers have improved surface qualities, due to the substantially reduced number of surface sinks.

The preparation of the elastomer of this invention is characterized by using, in the A-side or both the A-side and B-side, a poly(propylene oxide) polymer having a low monofunctional species content. Poly-(propylene oxide) polymers are advantageously prepared by the catalyzed, thermally induced polymerization of propylene oxide (PO) in the presence of an initiator compound as described below. Under the conditions of its polymerization, PO undergoes an isomerization reaction to form allyl alcohol. Allyl alcohol can then react with additional PO to form a monofunctional polyether having one hydroxyl group and a terminal allyl ether group. In addition, some of these allyl ether groups can rearrange under certain conditions to form terminal propenyl unsaturation.

These monofunctional polyether impurities are believed to react with polyisocyanates during the preparation of polyurethane foam, terminating the growing polymer chains and therefore limiting the buildup of polymer molecular weight.

In the case of hydroxyl-terminated polymers, each monofunctional molecule contains an unsaturated terminal group, and the presence of these species can be determined by measuring the quantity of the unsaturation. Measurement of this terminal unsaturation can be done by titration with mercuric acetate, as described in "Testing Urethane Foam Polyol Raw Materials", American Society for Testing and Materials, ASTM D-2849-69. In aminating the poly(propylene oxide) polymer, hydrogen often adds across this unsaturation site. Nonetheless, the presence of the resulting terminal propyl group is detectable and measurable through techniques such as nuclear magnetic resonance, and the presence of monofunctional species can be determined in this manner.

In this invention, the poly(propylene oxide) polymer is characterized by having up to 0.04, preferably 0.001 to 0.039, more preferably 0.001 to 0.030, most preferably 0.001 to 0.025, milliequivalent of monofunctional impurities (terminal unsaturation) per gram of polymer.

The poly(propylene oxide) polymer used herein has an equivalent weight of 1000 to 5000, preferably 1300 to 2500, more preferably 1500 to 2000. All equivalent weights herein are calculated by dividing the molecular weight by the nominal functionality. Within the preferred and more preferred ranges, the problems associated with monofunctional species content are especially significant in prior art processes.

The poly(propylene oxide polymer also has an average nominal functionality of at least 2, preferably 2 to 6, more preferably 2 to 4, most preferably 2 to 3. For preparing thermoplastic PUU polymers, a nominal functionality of 2 is most preferred.

In this invention, the term poly(propylene oxide) polymer refers to a homopolymer of propylene oxide or a copolymer thereof with a copolymerizable alkylene oxide, wherein the polymer contains at least 50 weight oxypropylene groups. Suitable copolymers of propylene oxide include random and block copolymers thereof with $C_2$-$C_6$ alkylene oxides such as ethylene oxide, 1,2- or 2,3-butylene oxide and the various isomers of hexylene oxide. Among these other alkylene oxides, ethylene oxide and the isomers of butylene oxide are preferred. Ethylene oxide is particularly preferred due to its reactivity and because it can be used to introduce primary hydroxyl groups to the polymer, thereby increasing its reactivity with a polyisocyanate. When the propylene oxide is copolymerized, it constitutes the major portion of the weight of the alkylene oxides. When the propylene oxide is randomly copolymerized with another alkylene oxide, the propylene oxide preferably constitutes at least 60, more preferably at least 70, most preferably at least 80 percent of the weight of the copolymerized alkylene oxides. Such random copolymers can also have terminal blocks of a different alkylene oxide, particularly ethylene oxide, but such terminal blocks preferably do not constitute more than 30, more preferably not more than 20 weight percent of the polyether. Among the random copolymers of propylene oxide, 1500-2000 equivalent weight, nominally 2-3 functional copolymers of a mixture of 80-95 weight percent propylene oxide and 5 to 20 weight percent ethylene oxide, optionally having terminal poly(ethylene oxide) blocks constituting 10 to 20 weight percent of the polyether, are most preferred.

When a block copolymer of poly(propylene oxide) and another alkylene oxide is used, the oxypropylene content thereof is preferably at least 60 weight percent, more preferably at least 70 weight percent and most preferably at least 80 weight percent. The other alkylene oxide used is preferably ethylene oxide, which is most preferably present in the form of terminal poly(oxyethylene) blocks. Among these, the most preferred polyether is a poly(propylene oxide) having an equivalent weight from 1500 to 2000 and a nominal functionality from 2 to 3, which contains terminal poly(ethylene oxide) blocks constituting 10 to 20 weight percent of the polyether.

Homopolymers of propylene oxide are also suitable, particularly those having an equivalent weight from 1300 to 2500 and a nominal functionality of 2 to 3.

Mixtures of these poly(propylene oxide) polymers can be used if desired. When mixtures are used, the mixture advantageously has a level of unsaturation, equivalent weight and nominal functionality as described before. Other relatively high equivalent weight (1000-5000 equivalent weight) polyols may also be used in conjunction with the poly(propylene oxide) polymer, but these are advantageously used in minor amounts, preferably less than 25 percent of the total weight of relatively high equivalent weight materials.

The poly(propylene oxide) may contain dispersed polymer particles such as polyurea, polyurethane, or polyurethane-urea particles, as well as particles of a vinyl addition polymer or copolymer such as polystyrene, polyacrylonitrile or polystyrene-co-acrylonitrile particles, or particles of a cured epoxy resin. When such dispersions are used, the equivalent weight and monofunctional species content are calculated for the purposes of this invention on a neat basis, i.e., as though the dispersed polymer particles were absent. Suitable such "polymer polyols" are disclosed, for example, in US-A-4,581,418, US-A-4,460,715, US-A-3,953,393, US-A-4,374,209 and US-A-4,324,716.

The term "nominal functionality" is used herein to designate the number of active hydrogen atoms on the initiator compound used in preparing the poly(propylene oxide) polymer. The poly(propylene oxide) polymer, absent impurities, normally has a number of active hydrogen-containing groups per molecule equal to the number of active hydrogen atoms on the initiator. In the polymerization of alkylene oxides, terminal hydroxyl groups are formed. These hydroxyl-terminated poly(propylene oxide) polymers are useful and generally preferred on the basis of cost and availability.

The poly(propylene oxide) polymer is advantageously prepared in the base-catalyzed polymerization of propylene oxide or mixture thereof with another alkylene oxide in the presence of an initiator compound. The initiator compound is also advantageously of relatively low molecular weight and preferably has a molecular weight from 17 to 1000, more preferably 31 to 400, more preferably 31 to 250. Suitable initiator compounds include water; polyhydroxyl-containing compounds, such as ethylene glycol, diethylene glycol, propylene glycol, dipropylene glycol, tripropylene glycol, glycerine, trimethylolpropane, pentaerythritol, sucrose and sorbitol; ammonia, monoethanolamine, diethanolamine, triethanolamine, aminoethylethanolamine, ethylenediamine, diethylenetriamine and low equivalent weight polyethers. It is highly preferred, however, that the initiator is devoid of amine nitrogen atoms. Hydroxyl-containing initiators containing no amine nitrogen atoms are most preferred, since in the past these initiators have been known to provide especially high monofunctional species contents. The polymers prepared using amine-containing

EP 0 408 201 B1

initiators tend to be autocatalytic and their use in preparing molded PUU elastomers has sometimes been found to reduce processing latitude. In addition, the measurement of terminal unsaturation in polyols initiated with amine-containing compounds has been found to be unreliable.

The initiator is contacted with the propylene oxide (and other alkylene oxides, if any) at elevated temperatures in the presence of a basic catalyst. Such processes are described for example, in US-A-3,393,243 and US-A-4,595,743. Suitable catalysts include alkali metal hydroxides and alkoxides, alkaline earth carboxylates and certain tertiary amine compounds as described in the foregoing patents. Generally, potassium hydroxide is the catalyst of choice. However, the selection of catalyst and/or reaction conditions does have an effect on the level of monofunctional species formed. Generally, mild conditions, such as the use of temperatures from 50 to 120°C and lower concentrations of catalyst tend to minimize the isomerization of propylene oxide to form monofunctional species. In addition, in some instances the selection of catalyst has been shown to produce lower levels of unsaturated impurities.

In addition, the monofunctional species content of the poly(propylene oxide) polymer can be reduced by hydrolyzing the terminal propenyl unsaturation site, thereby converting some of the monofunctional species to a difunctional species. In this manner, poly(propylene oxide) polymers having monofunctional species contents in excess of 0.04 meq/g can have the monofunctional species contents reduced to the desired level for use in this invention.

Terminal amine groups can be introduced to the polyether by various techniques, such as by a reductive amination with ammonia or a primary amine. Other techniques involve capping the polyether with a diisocyanate and hydrolyzing the free isocyanate groups with water to form the amine. In addition, the polyether can be capped with materials such as o- or p-chloromethylnitrobenzene, and then reduced with hydrogen to form a terminal aromatic amine, as described in US-A-4,847,416. Amine-terminated polyethers so prepared can be further reacted with ketones or aldehydes to form terminal imine groups, as described, for example, in US-A-4,794,129.

The poly(propylene oxide) is reacted with an excess of polyisocyanate to make an isocyanate-terminated prepolymer. Either aliphatic or aromatic polyisocyanates can be used. Suitable aliphatic polyisocyanates include ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3- and -1,4-diisocyanate, 1,5-diisocyanato-3,3,5-trimethylcyclohexane, 2,4- and/or 2,6-hexahydrotoluene diisocyanate, perhydro-2,4'- and/or -4,4'-diphenylmethanediisocyanate ($H_{12}$MDI) and isophorone diisocyanate.

Suitable aromatic polyisocyanates include, for example, 2,4- and/or 2,6-toluene diisocyanate (TDI), 1,3- and 1,4-phenylene diisocyanate, 4,4'- and/or 2,4'--diphenylmethane diisocyanate (MDI), 1,5-naphthylene diisocyanate, triphenylmethane-4,4',4''-triisocyanate, polyphenylpolymethylene polyisocyanates and mixtures thereof.

In addition, derivatives and prepolymers of the foregoing polyisocyanates such as those containing urethane, carbodiimide, allophanate, isocyanurate, acylated urea, biuret, ester and similar groups are useful herein. Of these, prepolymers of TDI and MDI, and the so-called "liquid MDI" products which contain carbodiimide groups and have an equivalent weight of 130-150 are of particular significance.

Of the foregoing polyisocyanates, TDI, MDI, isophorone diisocyanate, $H_{12}$MDI, hexamethylene diisocyanate, cyclohexane diisocyanate, their derivatives and mixtures thereof are preferred due to their cost, commercial availability and performance. TDI, MDI and derivatives of MDI are more preferred. MDI and polymeric MDI, and prepolymers and derivatives thereof are especially preferred. Isocyanate-terminated prepolymers as described in US-A-4,374,210 are of particular interest. In making these latter prepolymers, the use poly(propylene oxides) with low monofunctional species contents is preferred.

In preparing a prepolymer for use according to this invention, a substantial excess of the polyisocyanate is reacted with a composition including a 1000-5000 equivalent weight poly(propylene oxide) polymer to form an isocyanate-terminated prepolymer. In forming the prepolymer, usually at least 75, preferably at least 95 percent by weight of the 1000-5000 equivalent weight active hydrogen materials used in the prepolymer formation is one or more low monol-containing poly(propylene oxide) polymers. If a different 1000-5000 equivalent weight active hydrogen material is used in addition to the poly(propylene oxide) polymer, it is a material other than a poly(propylene oxide) polymer, such as a polyester, a polyether containing greater than 50 percent by weight of repeating units other than oxypropylene, or some other material. Other active hydrogen materials, such as chain extenders and crosslinkers as described hereinafter, can also be used in prepolymer formation.

The prepolymer prepared according to the foregoing paragraph is reacted with the second active hydrogen composition (B-side) to form an elastomer.

Of particular interest in reaction injection molding (RIM) applications are prepolymers prepared by reacting diphenylmethanediisocyanate (MDI) or a liquid MDI with a low monofunctional content polyether containing from 50 to 100, preferably 80 to 100, weight percent oxypropylene units derived from propylene oxide, a nominal functionality of 2 to 3 and an equivalent weight of from 1300 to 2500, more preferably 1500 to 2000. Such prepolymer advantageously has an NCO content of 6 to 25, preferably 8 to 20, more preferably 14 to 20 percent by weight. In preparing the prepolymer, low equivalent weight active hydrogen materials may be used in addition to the polyether, such as dipropylene glycol, tripropylene glycol and other similar materials, as taught in US-A-4,374,210.

A catalyst for the reaction of the poly(propylene oxide) polymer and the polyisocyanate is also advantageously used in making elastomers according to this invention. However, when the poly(propylene oxide) is amine-terminated, a catalyst may not be necessary and it is sometimes preferred to omit it. Although a wide variety of materials are known to be useful for this purpose, the most widely used and preferred catalysts are the tertiary amine catalysts and the organometallic catalysts.

Exemplary tertiary amine catalysts, include, for example, triethylenediamine, N-methyl morpholine, N-ethyl morpholine, diethyl ethanolamine, N-coco morpholine, 1-methyl-4-dimethylaminoethyl piperazine, 3-methoxy-N-dimethylpropylamine, N,N-diethyl-3-diethylaminopropylamine, dimethylbenzyl amine and bis-(2--dimethylaminoethyl)ether. Tertiary amine catalysts are advantageously employed in an amount from 0.01 to 5, preferably 0.05 to 2 parts per 100 parts by weight of the poly(propylene oxide) polymer.

Exemplary organometallic catalysts include organic salts of metals such as tin, bismuth, iron, mercury, zinc and lead, with the organotin compounds being preferred. Suitable organotin catalysts include dimethyltindilaurate, dibutyltindilaurate and stannous octoate. Other suitable catalysts are taught, for example, in US-A-2,846,408. Advantageously, 0.001 to 0.5 part by weight of an organometallic catalyst is used per 100 parts of propylene oxide polymer.

The reaction mixture may contain additional components such as chain extenders, crosslinkers, catalysts, surfactants, colorants, cell openers, flame retardants, antioxidants, mold release agents and UV stabilizers, which may vary according to the desired attributes of the elastomer.

It is highly preferred to employ a chain extender in preparing the elastomer of this invention. "Chain extenders", for the purposes of this invention, are compounds having two active hydrogen-containing groups per molecule and an equivalent weight from 31 to 300, preferably 31 to 150. Hydroxyl-containing chain extenders include the alkylene glycols and glycol ethers such as ethylene glycol, 1,3-propylene glycol, 1,4--butylene glycol, 1,6-hexamethylene glycol, diethylene glycol, triethylene glycol, dipropylene glycol, tripropylene glycol, 1,4-cyclohexanedimethanol and alkoxylated aniline. Amine chain extenders include diethyltoluene diamine, phenylene diamine, methylene bis(o-chloroaniline), NaCl-blocked methylene bis(aniline), toluene diamine and stearically hindered aromatic diamines which are substituted at at least one of the carbon atoms adjacent to each amine group with a lower alkyl group. In reaction injection molding formulations, the stearically hindered aromatic diamines, especially those containing a lower alkyl group on at least one carbon atom adjacent to each of the amine groups, are preferred. In casting operations, less reactive chain extenders including methylene bis(o-chloroaniline) and NaCl-blocked methylene bis(aniline) are preferred.

The amount of chain extender used varies substantially with the desired properties of the elastomer. In general, increasing the quantity of chain extender causes increases in tensile strength, hardness and stiffness of the elastomer. Thus, for preparing soft, highly flexible polymers, relatively low quantities of chain extender are used, whereas when a stiffer, harder elastomer is desired, greater quantities of chain extender are used. In general, the amount of chain extender advantageously ranges from 2 to 85, preferably 5 to 70, more preferably 10 to 40 parts by weight per 100 parts by weight of the 1000-5000 equivalent weight materials.

Crosslinkers may also be used, but are usually less preferred. Suitable such crosslinkers include alkanolamines and other compounds of 300 or lower equivalent weight having 3-8, preferably 3-4 active hydrogen-containing groups per molecule. Exemplary such compounds are glycerine and trimethylolpropane, alkoxylated derivatives thereof, as well as other alkylene triols. Preferred, however, are alkanolamines such as diethanolamine, triisopropanolamine, triethanolamine, diisopropanolamine and adducts of 4-8 moles of ethylene oxide and/or propylene oxide with alkylene polyamines such as ethylene diamine, and polyamines such as methylene bis(o-chloroaniline), ethylenediamine and ammonia. Most preferred, on the basis of its optimum reactivity, is diethanolamine.

It is often preferred, especially in RIM processes, to use an internal mold release agent to facilitate the rapid removal of the molded part for the mold. Although any internal mold release that is effective may be used, the mold release of choice is a metallic salt of certain carboxylic acids in conjunction with a primary, secondary or tertiary amine-containing compound, as taught in EP-A-119,471, US-A-4,876,019 and US-A-4,585,803. Particularly preferred internal mold release agents are zinc salts of fatty acids such as zinc stearate and zinc laurate in conjunction with diethyltoluene diamine and/or an amine-terminated polyether.

A blowing agent may be used if desired to reduce the density of the elastomer. The blowing agent is any material which is capable of generating a gas under the conditions of the reaction of a polyisocyanate and the poly(propylene oxide) polymer. Such materials include air, carbon dioxide, nitrogen, water, formic acid, low-boiling halogenated alkanes, finely divided solids and the so-called "azo" blowing agents such as azobis(formamide). Preferred are water, the low-boiling halogenated alkanes, or mixtures thereof. Blowing agents are advantageously employed in a quantity sufficient to provide the elastomer with a bulk density from 0.5, preferably 0.8 to 1.2 g/cm$^3$.

When blowing agents are used, it is usually advantageous to employ a small quantity of a surfactant to stabilize the cells in the reaction mixture until it has sufficiently cured to maintain its cellular configuration. Polysiloxane/poly(alkylene oxide) block copolymers and certain fatty acid salts are useful for the purpose.

In preparing elastomers according to this invention, any convenient method for mixing the reactants and dispensing them into a mold may be used. However, the two predominant commercial processes are casting and reaction injection molding processes.

In the casting process, the reaction mixture is commonly less reactive than that used in RIM processes, and it is preferred that the isocyanate-terminated prepolymer contains 0.25 to 30, preferably 0.5 to 25, more preferably 1 to 15 weight percent isocyanate groups. This prepolymer is then reacted in a second step with a chain extender and any remaining poly(propylene oxide) polymer to form the molded polymer. In the reaction with the prepolymer and the chain extender, an isocyanate index of 90 to 125 is preferred, and of 100 to 115 is more preferred. Suitable casting techniques are described in US-A-4,689,356.

In the reaction injection molding process, more highly reactive materials can be processed. Thus, this Process is generally used when the poly(propylene oxide) polymer is terminated in primary hydroxyl, amine or imine groups, highly reactive chain extenders are used. Reaction injection molding processes are also favored in the production of large parts, i.e., those weighing over one pound (0.45 kg). In the reaction injection molding process, the reactants are impingement mixed under high pressure and immediately transferred to a mold where initial curing takes place. Demolding in reaction injection molding processes is typically done within 10 seconds to 3 minutes, Preferably 15 seconds to one minute, more preferably 15 to 45 seconds after the mold is filled. After demolding, postcuring is often performed on the molded part in order to further develop the physical properties. Suitable RIM techniques are described, for example, in US-A-4,297,444 and US-A-4,218,543.

1000-5000 Equivalent weight material in the B-side composition does not have to include a low monofunctional species poly(propylene oxide) polymer. However, such is preferred.

In RIM applications, the B-side systems preferably contain an internal mold release package as described in US-A-4,876,019 or US-A-4,585,803. Such internal mold release package preferably comprises a zinc salt of a C$_{12-20}$ carboxylic acid and in the first system either an aminated polyether or an amine-initiated polyether of 800 or lower molecular weight. The most preferred systems contain 0.25 to 5 weight percent of zinc stearate or zinc laurate and 5 to 70 weight percent diethyltoluenediamine, based on weight of polyether(s). Those systems, with or without the mold release package, are most preferably reacted with an MDI prepolymer containing 8 to 30 percent NCO groups.

The elastomer made in accordance with this invention is useful, for example, in dynamic applications such as belts and tow truck tires, as well as in static applications such as beer keg skirts, automotive fascia and body panels. In general, the elastomer of this invention is useful for similar applications as conventional PUU elastomers.

The elastomers prepared according to this invention have certain properties which render them particularly useful in certain applications. In high temperature dynamic applications, this elastomer exhibits improved life in terms of time of use before failure. In addition, RIM elastomers prepared in accordance with this invention in some instances show improved heat sags and reduced numbers of surface sinks as compared to conventional elastomers. Because it is possible to obtain adequate reactivity with hydroxyl-terminated poly(propylene oxide) polymers with lower oxyethylene content, the resulting elastomer in such cases exhibits reduced moisture sensitivity.

The following examples are provided to illustrate the invention, but are not intended to limit the scope thereof. All parts and percentages are by weight unless otherwise indicated.

Example 1

Two prepolymers were prepared by reacting 46.5 parts pure MDI (98 percent 4,4'- isomer), 43.5 percent of a polyol, and 10 percent of a 143 equivalent weight "liquid" MDI. In the first prepolymer (Prepolymer A) the polyol was a 1660 equivalent weight, glycerine-initiated, nominally trifunctional poly-(propylene oxide) containing 0.080 meq/g monofunctional species. In the second prepolymer (Prepolymer B) a polyol was used which differed only in that the monol content was 0.022 meq/g.

Four reaction injection molded elastomers were prepared using one of these prepolymers and a B-side formulation containing 56.3 parts polyol, 3.5 parts of a 200 equivalent weight, primary amine terminated, propylene glycol-initiated poly(propylene oxide), 2.2 parts zinc stearate, 0.9 part of an adduct of 5 moles propylene oxide and one mole of ethylene diamine, 36 parts of an isomeric mixture of 2,4- and 2,6-diethyltoluenediamine, 0.1 part of an organotin catalyst, 0.1 part of a triethylenediamine solution and 1 part of a silicone surfactant. The isocyanate index was 103. The elastomers were prepared on a Cincinnati Milacron HT RIM machine and injected into a 20.5 X 24.5 X 0.125" (521 x 622 x 3.175 mm) steel mold. Component temperatures were about 105°F (41°C), mold temperature was about 155°F (68°C), the injection rate was 2.5 lb/sec (1.2 kg/sec), injection pressures were about 1850 psi (12.75 MPa) and the demold time was 30 seconds.

In Comparative Sample A, Prepolymer A was used, and the B-side polyol was a 1660 equivalent weight, glycerine-initiated poly(propylene oxide) which was end-capped with 17.5 percent ethylene oxide and which contained 0.065 meq/g monofunctional species.

In Sample 1, the same B-side polyol was used, but Prepolymer B replaced Prepolymer A.

Comparative Sample B was the same as Comparative Sample A, except the B-side polyol was replaced with a polyol which was the same in all respects except the monofunctional species content was only 0.028 meq/g. Comparative Sample C was the same as Comparative Sample B, except Prepolymer B was used.

Thus, Comparative Sample A employed a high monol polyol on both the A-side and B-side. Sample 1 employed a low monol polyol in the A-side prepolymer, Comparative Sample B employed a low monol polyol in the B-side only, and Comparative Sample C employed low monol polyols in both the prepolymer and B-side.

The results of physical property testing are reported in Table 4.

**TABLE 4**

| | Sample or Comparative Sample No. | | | |
| --- | --- | --- | --- | --- |
| | A* | 1 | B* | C* |
| Density, kg/m³ | 1090 | 1100 | 1090 | 1100 |
| Flexural Modulus①, psi (MPa) | 48,822 (337) | 53,400 (368) | 53,150 (366.5) | 49,200 (339) |
| Flexural Modulus ratio② | 2.65 | 2.15 | 2.09 | 2.06 |
| Tensile Strength③, psi (MPa) | 4145 (28.6) | 4070 (28.1) | 3949 (27.2) | 4225 (29.1) |
| % Elongation③ | 240 | 220 | 225 | 220 |
| Tear Strength③, pli (kN/m) | 605 (106) | 615 (108) | 610 (107) | 620 (108.5) |
| Heat Sag④, mm | 22 | 15 | 16 | 12 |
| Impact Resistance⑤, lbs (N) | 828 (114) | 820 (113) | 863 (119) | 892 (123) |

* Not an example of this invention.
① ASTM D-790. Reported in psi. Flexural modulus ratio is the ratio of the flexural modulus at -20°F (-29°C) to that at 158°F (70°C). Low values are superior.
② ASTM D-624.
③ At 250°F (121°C) for 60 minutes with a 6" (152.4) overhang. Reported in mm.
④ ASTM D-3763. Break force is reported.

As can be seen from the data in Table 4, the tensile, tear, elongation and room temperature flexural modulus of Comparative Samples A, B & C and Sample 1 were relatively constant. However, each of Samples 1, B & C showed a marked improvement in heat sag and flexural modulus ratio. This is particularly

11

surprising for Sample No. 1, since the only change was the use of a low monol polyol in the prepolymer, and a high monol polyol was still present in the B-side. In addition, Samples B and C showed a substantial improvement in impact strength. All of Samples 1, B & C subjectively had better green strength than Comparative Sample A, with Sample C being best.

An examination of Comparative Sample A shows that 15 to 25 percent of its surface exhibited surface sinks i.e. areas of slight depression. Each of Samples 1, B & C showed significantly fewer surface sinks. Sample No. B contained surface sinks over less than about 2 percent of its surface. Thus, about 90 percent of the surface sinks were eliminated with the use of low monofunctional species poly(propylene oxide) polymers. As a result, when painted, the Samples 1, B & C exhibit a markedly better appearance than Comparative Sample A.

## Claims

1. A process for preparing a polyurethane and/or polyurea wherein an isocyanate-terminated prepolymer, obtained by reacting an excess of a poly-isocyanate with a first active hydrogen composition including 1000-5000 equivalent weight material, wherein at least the major portion by weight of the 1000-5000 equivalent weight material is a (low monol content) poly(propylene oxide) polymer having nominal functionality of at least two isocyanate-reactive groups per molecule or mixture thereof, said low monol content poly(propylene oxide) polymer or mixture thereof having at most 0.04 milli-equivalent per gram (meq/g) terminal unsaturation (as measured by titration with mercuric acetate according to ASTM D-2849-69),
is reacted with a (second) active hydrogen composition, characterized in that the second active hydrogen composition is different from said first active hydrogen composition and contains less weight, if any, of a low monol content poly(propylene oxide) polymer or mixture thereof, and is selected from
(1) a mixture of a hydroxyl-terminated, nominally di-or tri-functional poly(propylene oxide) polymer of 1300 to 2500 equivalent weight having terminal ethylene oxide capping constituting up to 20 weight percent of the weight of the poly(propylene oxide) and diethyltoluenediamine or other aromatic diamine chain extender containing a lower alkyl group on at least one of the carbon atoms adjacent to each amine group;
(2) a mixture of a hydroxyl-terminated, nominally di-or tri- functional poly(propylene oxide) polymer of 1300 to 2500 equivalent weight having terminal ethylene oxide capping constituting up to 20 weight percent of the weight of the poly(propylene oxide), up to equal quantities, based on weight of hydroxyl-terminated poly(propylene oxide) polymer, of a nominally di- or tri- functional aminated polyether of 150 to 6000 molecular weight, and diethyltoluenediamine or other aromatic diamine chain extender containing a lower alkyl group on at least one of the carbon atoms adjacent to each amine group, and
(3) a mixture of an amine and/or imine-terminated, nominally di- or tri- functional poly(propylene oxide) polymer of 1300 to 2500 equivalent weight and diethyltoluenediamine or other aromatic diamine chain extender containing a lower alkyl group on at least one of the carbon atoms adjacent to each amine group.

2. A process as claimed in Claim 1, wherein said second active hydrogen composition does not contain any said low monol content poly(propylene oxide) polymer.

3. A process as claimed in Claim 1 or Claim 2, wherein said first active hydrogen composition contains less than 25 weight percent material having an equivalent weight of 1000 to 5000 other than a poly-(propylene oxide).

4. A process as claimed in Claim 3, wherein said first active hydrogen composition contains at least 95 weight percent of a said low monol content poly(propylene oxide) or mixture thereof.

5. A process as claimed in any one of the preceding claims, wherein said low monol content poly-(propylene oxide) polymer has 0.001 to 0.030 meq/g monofunctional impurities.

6. A process as claimed in any one of the preceding claims, wherein said monofunctional impurity content is 0.001 to 0.025 meq/g.

EP 0 408 201 B1

7. A process as claimed in any one of the preceding claims, wherein said low monol content poly-(propylene oxide) polymer has an equivalent weight of 1300 to 2500.

8. A process as claimed in Claim 7, wherein said equivalent weight is 1500 to 2000.

9. A process as claimed in any one of the preceding claims, wherein said low monol content poly-(propylene oxide) polymer has an average nominal functionality of 2 to 4.

10. A process as claimed in Claim 9, wherein said average nominal functionality is 2 to 3.

11. A process as claimed in any one of the preceding claims, wherein said low monol content poly-(propylene oxide) polymer is the reaction product of propylene oxide or a mixture of propylene oxide and at least one other alkylene oxide in the presence of an initiator compound which is devoid of amine nitrogen atoms.

12. A process as claimed in any one of the preceding claims, wherein said low monol content poly-(propylene oxide) polymer is a polymer of propylene oxide which is end-capped with up to 20 weight percent ethylene oxide, has a nominal functionality from 2 to 3 and has an equivalent weight from 1300 to 2500.

13. A process as claimed in any one of Claims 1 to 11, wherein said low monol content poly(propylene oxide) polymer is a 1500-2000 equivalent weight, random copolymer of a mixture of 80 to 95 weight percent propylene oxide and 5 to 20 weight percent ethylene oxide and optionally having terminal poly-(ethylene oxide) blocks constituting 10 to 20 weight percent of the polyether, and has a nominal functionality of 2 to 3.

14. A process as claimed in any one of Claims 1 to 12, wherein said low monol content poly(propylene oxide) polymer is a 1500-2000 equivalent weight, block copolymer of propylene oxide containing 10 to 20 weight percent terminal poly(ethylene oxide) blocks, and has a nominal functionality of 2 to 3.

15. A process as claimed in any one of the preceding claims, wherein the first active hydrogen composition further comprises, as a chain extender, a compound having two active hydrogen-containing groups per molecule and an equivalent weight of 31 to 300.

16. A process as claimed in Claim 15, wherein the chain extender is an aromatic diamine containing a lower alkyl group on at least one of the carbon atoms adjacent to each amine group.

17. A process as claimed in any one of the preceding claims, wherein said process is a casting process and said prepolymer contains from 0.5 to 25 weight percent NCO groups.

18. A process as claimed in any one of Claims 1 to 16, wherein said prepolymer is an MDI prepolymer having an NCO content of 8 to 30 percent by weight.

19. A process as claimed in any one of the preceding claims, wherein the polyisocyanate is toluene diisocyanate, diphenylmethane diisocyanate or a derivative of diphenylmethane diisocyanate.

20. A process as claimed in any one of Claims 1 to 16, 18 and 19 which is a reaction injection molding process.

21. A process as claimed in any one of Claims 1 to 16, 18 and 19, which is a casting process.

**Patentansprüche**

1. Verfahren zur Herstellung eines Polyurethans und/oder Polyharnstoffs, wobei ein Präpolymer mit enständigen Isocyanatgruppen, das erhalten wird durch Umsetzten eines Überschusses eines Polyisocyanats mit einer ersten, aktiven Wasserstoff enthaltenden Zusammensetzung, die ein Material mit einem Äquivalentgewicht von 1000-5000 umfaßt, worin mindestens der Haupt-Gewichtsanteil des Materials mit einem Äquivalentgewicht von 1000-5000 ein Polypropylenoxid-Polymer (mit niedrigem

13

Monol-Gehalt), das eine nominale Funktionalität von mindestens zwei Isocyanat-reaktiven Gruppen pro Molekül aufweist, oder ein Gemisch davon ist, wobei das Polypropylenoxid-Polymer mit niedrigem Monol-Gehalt oder ein Gemisch davon, höchstens 0,04 Milliäquivalent pro Gramm (meq/g) terminale Unsättigung (wie durch Tritration mit Quecksilberacetat nach ASTM D-2849-69 bestimmt) aufweist, mit einer (zweiten) aktiven Wasserstoff enthaltenden Zusammensetzung umgesetzt wird,

dadurch gekennzeichnet, daß die zweite aktiven Wasserstoff enthaltende Zusammensetzung von der ersten, aktiven Wasserstoff enthaltenden Zusammensetzung verschieden ist und weniger Gewicht, wenn überhaupt, eines Polypropylenoxid-Polymers mit niedrigem Monol-Gehalt oder eines Gemisches davon enthält, und ausgewählt ist unter:

(1) einem Gemisch eines nominal bi- oder trifunktionellen Polypropylenoxid-Polymers mit endständigen Hydroxylgruppen und mit einem Äquivalentgewicht von 1300 bis 2500, das terminale Ethylenoxid-Abschlüsse aufweist, die bis zu 20 Gew.-% des Polypropylenoxid-Gewichts ausmachen, mit Diethyltoluoldiamin oder einem anderen aromatischen Diamin-Kettenverlängerer, der an mindestens einem der jeder Aminogruppe benachbarten Kohlenstoffatome eine niedere Alkylgruppe aufweist,

(2) einem Gemisch eines nominal bi- oder trifunktionellen Polypropylenoxid-Polymers mit endständigen Hydroxylgruppen und mit einem Äquivalentgewicht von 1300 bis 2500, das terminale Ethylenoxid-Abschlüsse aufweist, die bis zu 20 Gew.-% des Polypropylenoxid-Gewichts ausmachen, und das bis zu gleichen Mengen, bezogen auf das Gewicht des Polypropylenoxid-Polymers mit endständigen Hydroxylgruppen einen nominal bi- oder trifunktionellen aminierten Polyether mit einem Molekulargewicht von 150 bis 6000 aufweist, mit Diethyltoluoldiamin oder einem anderen aromatischen Diamin-Kettenverlängerer, der an mindestens einem der jeder Aminogruppe benachbarten Kohlenstoffatome eine niedere Alkylgruppe aufweist, und

(3) einem Gemisch eines nominal bi- oder trifunktionellen Polypropylenoxid-Polymers mit endständigen Aminogruppen und/oder Iminogruppen und mit einem Äquivalentgewicht von 1300 bis 2500, mit Diethyltoluoldiamin oder einem anderen aromatischen Diamin-Kettenverlängerer, der an mindestens einem der jeder Aminogruppe benachbarten Kohlenstoffatome eine niedere Alkylgruppe aufweist.

2. Verfahren nach Anspruch 1, wobei die zweite, aktiven Wasserstoff enthaltende Zusammensetzung überhaupt kein Polypropylen-Polymer mit niedrigem Monol-Gehalt enthält.

3. Verfahren nach Anspruch 1 oder Anspruch 2, wobei die erste, aktiven Wasserstoff enthaltende Zusammensetzung weniger als 25 Gew.-% eines Materials mit einem Äquivalentgewicht von 1000 bis 5000 enthält, das nicht Polypropylenoxid ist.

4. Verfahren nach Anspruch 3, wobei die erste, aktiven Wasserstoff enthaltende Zusammensetzung zu mindestens 95 Gew.-% das Polypropylenoxid mit niedrigem Monol-Gehalt oder ein Gemisches davon enthält.

5. Verfahren nach einem der vorhergehenden Ansprüche, wobei das Polypropylenoxid-Polymer mit niedrigem Monol-Gehalt 0,001 bis 0,030 meq/g monofunktionelle Verunreinigungen aufweist.

6. Verfahren nach einem der vorhergehenden Ansprüche, wobei der Gehalt an monofunktioneller Verunreinigung 0,001 bis 0,025 meq/g beträgt.

7. Verfahren nach einem der vorhergehenden Ansprüche, wobei das Polypropylenoxid-Polymer mit niedrigem Monol-Gehalt ein Äquivalentgewicht von 1300 bis 2500 aufweist.

8. Verfahren nach Anspruch 7, wobei das Äquivalentgewicht 1500 bis 2000 beträgt.

9. Verfahren nach einem der vorhergehenden Ansprüche, wobei das Polypropylenoxid-Polymer mit niedrigem Monol-Gehalt eine durchschnittliche nominale Funktionalität von 2 bis 4 besitzt.

10. Verfahren nach Anspruch 9, wobei die durchschnittliche nominale Funktionalität 2 bis 3 beträgt.

11. Verfahren nach einem der vorhergehenden Ansprüche, wobei das Polypropylenoxid-Polymer mit niedrigem Monol-Gehalt das Reaktionsprodukt von Propylenoxid oder einem Gemisch von Propylenoxid und mindestens einem anderen Alkylenoxid, in der Gegenwart einer Starter-Verbindung, der Amin-Stickstoffatome fehlen, darstellt.

14

**12.** Verfahren nach einem der vorhergehenden Ansprüche, wobei das Polypropylenoxid-Polymer mit niedrigem Monol-Gehalt ein Polypropylenoxid-Polymer ist, das am Ende mit bis zu 20 Gew.-% Ethylenoxid als Abschluß versehen ist, eine nominale Funktionalität von 2 bis 3 aufweist und ein Äquivalentgewicht von 1300 bis 2500 besitzt.

**13.** Verfahren nach einem der Ansprüche 1 bis 11, wobei das Polypropylenoxid-Polymer mit niedrigem Monol-Gehalt ein statistisches Copolymer mit einem Äquivalentgewicht von 1500-2000 eines Gemisches von 80 bis 95 Gew.-% Propylenoxid und 5 bis 20 Gew.-% Ethylenoxid ist und das gegebenenfalls terminale Polyethylenoxid-Blöcke, die 10 bis 20 Gew.-% des Polyethers ausmachen, aufweist und eine nominale Funktionalität von 2 bis 3 besitzt.

**14.** Verfahren nach einem der Ansprüche 1 bis 12, wobei das Polypropylenoxid-Polymer mit niedrigem Monol-Gehalt ein Block-Copolymer von Propylenoxid ist, das ein Äquivalentgewicht von 1500-2000 aufweist, 10 bis 20 Gew.-% terminale Polyethylenoxid-Blöcke enthält und eine nominale Funktionalität von 2 bis 3 besitzt.

**15.** Verfahren nach einem der vorhergehenden Ansprüche, wobei die erste, aktiven Wasserstoff enthaltende Zusammensetzung weiter als einen Kettenverlängerer eine Verbindung umfaßt, die zwei aktiven Wasserstoff enthaltende Gruppen pro Molekül besitzt und ein Äquivalentgewicht von 31 bis 300 aufweist.

**16.** Verfahren nach Anspruch 15, wobei der Kettenverlängerer ein aromatisches Diamin ist, das an mindestens einem der jeder Aminogruppe benachbarten Kohlenstoffatome eine niedere Alkylgruppe aufweist.

**17.** Verfahren nach einem der vorhergehenden Ansprüche, wobei das Verfahren ein Gießverfahren ist und das Präpolymer 0,5 bis 25 Gew.-% NCO-Gruppen enthält.

**18.** Verfahren nach einem der Ansprüche 1 bis 16, wobei das Präpolymer ein MDI-Präpolymer mit einem NCO-Gehalt von 8 bis 30 Gew.-% ist.

**19.** Verfahren nach einem der vorhergehenden Ansprüche, wobei das Polyisocyanat Toluoldiisocyanat, Diphenylmethandiisocyanat oder ein Derivat von Diphenylmethandiisocyanat ist.

**20.** Verfahren nach einem der Ansprüche 1 bis 16, 18 und 19, das ein Reaktionsspritzgießverfahren ist.

**21.** Verfahren nach einem der Ansprüche 1 bis 16, 18 und 19, das ein Gießverfahren ist.

**Revendications**

**1.** Procédé de préparation d'un polyuréthanne et/ou d'une polyurée dans lequel on fait réagir un prépolymère à terminaison isocyanate, obtenu en faisant réagir un excès de polyisocyanate avec une première composition d'hydrogène actif incluant un matériau d'un poids équivalent de 1000-5000, la majeure partie en poids du matériau d'un poids équivalent de 1000-5000 étant un polymère de poly-(oxyde de propylène) (à faible teneur en monoalcool) ayant une fonctionnalité nominale d'au moins deux groupes réactifs à l'égard de l'isocyanate par molécule ou mélange de tels polymères, ledit polymère de poly(oxyde de propylène) à faible teneur en monoalcool, ou un mélange de tels polymères, ayant une insaturation de terminaison d'au plus 0,04 milliéquivalent par gramme (meq/g) (mesuré par titrage avec un acétate mercurique selon ASTM D-2849-69) avec une (seconde) composition d'hydrogène actif, caractérisé par le fait que la seconde composition d'hydrogène actif est différente de ladite première composition d'hydrogène actif et contient, si elle en contient, un moindre poids d'un dit polymère de poly(oxyde de propylène) à faible teneur en monoalcool, ou un mélange de tels polymères, et qu'on la choisit parmi

(1) un mélange d'un polymère de poly(oxyde de propylène), nominalement di- ou tri- fonctionnel, à terminaison hydroxyle, de poids équivalent de 1300 à 2500, comportant une coiffe d'oxyde d'éthylène de terminaison constituant jusqu'à 20% en poids du poids du poly(oxyde de propylène) et d'un agent d'extension de la chaîne, du type diéthyltoluènediamine ou diamine aromatique, contenant un groupe alkyle inférieur sur au moins l'un des atomes de carbone adjacents a chaque

EP 0 408 201 B1

groupe amine;

(2) un mélange d'un polymère de poly(oxyde de propylène), nominalement di- ou tri- fonctionnel, à terminaison hydroxyle, de poids équivalent de 1300 à 2500, comportant une coiffe d'oxyde d'éthylène de terminaison constituant jusqu'à 20% en poids du poids du poly(oxyde de propylène), de quantités pouvant aller jusqu'à être égales, sur la base du poids du polymère de poly(oxyde de propylène) à terminaison hydroxyle, d'un polyéther aminé, nominalement di- ou tri- fonctionnel, d'un poids moléculaire de 150 à 6000, et d'un agent d'extension de la chaîne, du type diéthyltoluènediamine ou diamine aromatique, contenant un groupe alkyle inférieur sur au moins l'un des atomes de carbone adjacents à chaque groupe amine, et

(3) un mélange d'un polymère de poly(oxyde de propylène) nominalement di- ou tri-fonctionnel, à terminaison amine et/ou imine, d'un poids équivalent de 1300 à 2500, et d'un agent d'extension de la chaîne, du type diéthyltoluènediamine ou diamine aromatique, contenant un groupe alkyle inférieur sur au moins l'un des atomes de carbone adjacents à chaque groupe amine.

2.  Procédé selon la revendication 1, dans lequel ladite seconde composition d'hydrogène actif ne contient aucun polymère de poly(oxyde de propylène) à faible teneur en monoalcool.

3.  Procédé selon la revendication 1 ou la revendication 2, dans lequel ladite première composition d'hydrogène actif contient moins de 25 pour-cent en poids d'un matériau, d'un poids équivalent de 1000 à 5000, autre qu'un poly(oxyde de propylène).

4.  Procédé selon la revendication 3, dans lequel la première composition d'hydrogène actif contient au moins 95 pour-cent en poids d'un dit poly(oxyde de propylène) à faible teneur en monoalcool ou un mélange de ceux-ci.

5.  Procédé selon l'une quelconque des revendications précédentes, dans lequel ledit polymère de poly-(oxyde de propylène) à faible teneur en monoalcool contient de 0,001 à 0,030 meq/g d'impuretés monofonctionnelles.

6.  Procédé selon l'une quelconque des revendications précédentes, dans lequel ladite teneur en impuretés monofonctionnelles est de 0,001 à 0,025 meq/g.

7.  Procédé selon l'une quelconque des revendications précédentes, dans lequel ledit polymère de poly-(oxyde de propylène) à faible teneur en monoalcool a un poids équivalent de 1300 à 2500.

8.  Procédé selon la revendication 7, dans lequel ledit poids équivalent est de 1500 à 2000.

9.  Procédé selon l'une quelconque des revendications précédentes, dans lequel ledit polymère de poly-(oxyde de propylène) à faible teneur en monoalcool présente une fonctionnalité nominale moyenne de 2 à 4.

10.  Procédé selon la revendication 9, dans lequel ladite fonctionnalité nominale moyenne est 2 à 3.

11.  Procédé selon l'une quelconque des revendications précédentes, dans lequel ledit polymère de poly-(oxyde de propylène) à faible teneur en monoalcool est le produit de la réaction d'un oxyde de propylène ou d'un mélange d'oxyde de propylène et d'au moins un oxyde d'un autre alkylène en présence d'un composé initiateur dépourvu d'atomes d'azote du type amine.

12.  Procédé selon l'une quelconque des revendications précédentes, dans lequel ledit polymère de poly-(oxyde de propylène) à faible teneur en monoalcool est un polymère d'un oxyde de propylène qui est coiffé en terminaison par jusqu'à 20 pour-cent poids d'oxyde d'éthylène, présente une fonctionnalité nominale allant de 2 à 3 et a un poids équivalent de 1300 à 2500.

13.  Procédé selon l'une quelconque des revendication 1 à 11, dans lequel ledit polymère de poly(oxyde de propylène) à faible teneur en monoalcool est un copolymère statistique de poids équivalent de 1500-2000, constitué d'an mélange de 80 à 95 pour-cent en poids d'oxyde de propylène et de 2 à 20 pour-cent en poids d'oxyde d'éthylène et présentant éventuellement des séquences de terminaison de poly-(oxyde d'éthylène) constituant de 10 à 20 pour-cent en poids du polyéther et en ce qu'il présente une fonctionnalité nominale de 2 à 3.

**14.** Procédé selon l'une quelconque des revendications 1 à 12, dans lequel ledit polymère de poly(oxyde de propylène) à faible teneur en monoalcool est un copolymère d'oxyde de propylène séquencé, d'un poids équivalent de 1500-2000, contenant de 10 à 20 pour-cent en poids de séquences de terminaison de poly(oxyde d'éthylène) et en ce qu'il présente une fonctionnalité nominale de 2 à 3.

**15.** Procédé selon l'une quelconque des revendications précédentes, dans lequel la première composition d'hydrogène actif comporte en outre, en tant qu'agent d'extension de la chaîne, un composé présentant deux groupes contenant de l'hydrogène actif par molécule et ayant un poids équivalent de 31 à 300.

**16.** Procédé selon la revendication 15, dans lequel l'agent d'extension de la chaîne est une diamine aromatique contenant un groupe alkyle inférieur sur au moins l'un des atomes de carbone adjacents à chaque groupe amine.

**17.** Procédé selon l'une quelconque des revendications précédentes, dans lequel ledit procédé est un procédé par coulée et dans lequel ledit prépolymère contient de 0,5 à 25 pour-cent en poids de groupes NCO.

**18.** Procédé selon l'une quelconque des revendication 1 à 16, dans lequel ledit prépolymère est un prépolymère de MDI ayant une teneur en NCO de 8 à 30 pour-cent en poids.

**19.** Procédé selon l'une quelconque des revendications précédentes, dans lequel le polyisocyanate est du diisocyanate de toluène, du diisocyanate de diphénylméthane ou un dérivé du diisocyanate de diphénylméthane.

**20.** Procédé selon l'une quelconque des revendications 1 à 16, 18 et 19, qui est procédé de moulage par réaction et injection.

**21.** Procédé selon l'une quelconque des revendications 1, à 16, 18 et 19 qui est un procédé par coulée.